# EUROPEAN PATENT APPLICATION

(11) **EP 1 130 912 A1**
(43) Date of publication of application: **05.09.2001**
(21) Application number: 01301906.2
(22) Date of filing: 01.03.2001
(51) Int. Cl.: H04N 5/445, G09B 5/06

(54) **Improvements relating to broadcast data receiving apparatus**

(30) Priority: 01.03.2000 GB 0004811
(71) Applicant: Pace Micro Technology PLC, Saltaire, Shipley, BD18 3LF (GB)
(72) Inventor: Holme, Richard, Cookridge, Leeds LS16 7D8 (GB); Frost, Jonathan, Thackley, Bradford BD10 8NH (GB)
(74) Representative: Wood, Graham

(57) **Abstract**

The invention relates to a television system which includes a broadcast data receiver for processing received data and generating television programmes via a display screen and generating on the screen a range of user selectable function or modes of operation of the system. The user makes the selection using a control device which includes light detection means and which can be pointed at the screen to define a particular option to be selected. When the electron or CRT beam of the screen passes through the field of vision of the light detecting device, the location on the screen is determined and, with comparison to the know location of the selectable options on the screen, the appropriate option is selected and performed.

## Description

Broadcast data receiving apparatus is typically provided to allow the reception of transmitted data which, when processed, allows for the generation of television programmes on a television set and which programmes typically comprise a combination of video, audio and/or text data. The television set can include as an integral part thereof the broadcast data receiving apparatus or alternatively, may be connected to a self contained broadcast data receiving apparatus.

With the advent of digital data broadcast systems, the range of services and functions which can be provided to the user via the broadcast data receiver has increased dramatically.

Said receiver apparatus typically includes a means to allow user selections to be made to select particular functions or modes of operation of the apparatus and, while originally, this was performed by the selection of buttons mounted on the television set apparatus itself, the most normal and conventional form now used is to use a remote control device. The remote control device allows for the generation of an infrared signal which is representative of a particular control signal generated by the remote control device in response to a user selection of a particular button or buttons on the remote control device. The infrared signal is transmitted to and received by the digital data receiver as long as the remote control device generates a signal in the general direction of the receiver so as to be picked up by the same. When the infrared signal is received, the broadcast data receiver processes the same and the appropriate function or mode change is undertaken. However, as the range of selectable functions and modes increases, so there is perceived to be a need for users to be able to more efficiently, accurately and quickly make function selections in conjunction with the apparatus. One known proposed solution is to provide a "mouse" control on the remote control device in a similar fashion to the mouse which is typically provided for personal computers. However, the incorporation of a mouse device into a remote control is a relatively complex matter and the complexity of data which is required to be transmitted from the remote control device incorporating the mouse is regarded as being a significant disadvantage.

The aim of the present invention is to provide a remote control device which incorporates a means of allowing user selection of functions or modes of operation of a broadcast data receiver and/or television set and to allow interaction between the remote control device and an on-screen display which displays the selection options available.

In a first aspect of the invention there is provided broadcast data receiving apparatus, said apparatus being provided to receive and process data to generate television programmes and said apparatus further including a function or mode control device which allows for the user selection of functions or modes of operation of said apparatus, said apparatus further including a display screen on which a range of user selectable options can be displayed when in an appropriate mode and wherein said function or mode control device includes a light sensitive detecting device which can be directed by the user at one of the selectable options on the display screen and, said light sensitive detecting device is activated by the CRT beam of the display screen passing through the field of vision of the device and, upon detection, a signal is transmitted to allow the position on the screen to be identified with respect to the activation of the light sensitive detection device.

With the activation of the device and the location of the field of vision detected with respect to the display screen so the location can be compared with the position of the selectable options displayed on the screen and the apparatus performs the user option which matches the location of the field of vision of the light sensitive detection device on the display screen. This allows the user selected option to be identified and undertaken.

In one embodiment, the device transmits a signal to the data broadcast receiver upon detection of the CRT beam and said signal is transmitted by an infrared signal transmitted from the control device to the broadcast data receiver.

In an alternative embodiment, the signal is transmitted via a cable connection between the device and the broadcast data receiver.

In one embodiment the detecting device is provided as a remote control device.

In order to process the information and detect the position at which the light detection device is directed on the display screen and hence make the appropriate user selection, the data is processed as follows in accordance with one embodiment:-

The light detection device is provided to detect the time at which the electron or CRT beam on the display screen passes through the location on the screen of the field of vision of the light sensitive detection device. is pointed.

When the electrode beam passes through the area of the field of vision the same is detected by the device and a signal is generated by a remote control device and transmitted to the broadcast data receiving means. The broadcast data receiving means obtains data relating to the time at which the CRT beam started on the screen, typically the vertical synchronisation signal (VSync) at the start of a video frame, and by calculating the time elapsed between the start point and the point of detection, in conjunction with being aware of the path of the CRT beam so the XY coordinates of the point of detection on the display screen and hence the location of the display screen at which the user has pointed the detection device is identified.

Upon detecting the XY coordinates, the data processing means determines the user selectable options displayed on the display screen at that location and makes the required user selection.

In order to preserve battery power for the light detection device as herein described, it is envisaged that the device includes a means whereby the light detection device can be switched on or off by the user and, if the light detection device is detected to be inactive over a preset period of time, then the same will be automatically switched off so as to preserve consumption.

Although the invention is described in conjunction with broadcast data receiving apparatus it should be appreciated that the invention of the light detection device can be used with any form of apparatus which includes a display screen and in which a periodic change in condition can be detected by a light detecting device and the position of the detection area of the same on the display screen can be determined.

Specific embodiments of the invention will now be described with reference to the accompanying drawing, wherein:-

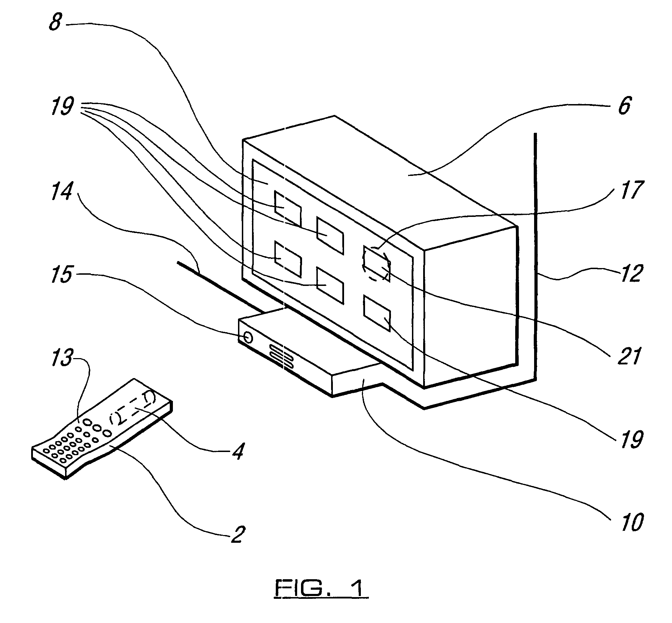

Fig. 1 illustrates an embodiment of the invention.

Referring to Fig. 1, there is illustrated the apparatus which can be used to perform the invention in one embodiment, said apparatus comprising a remote control device 2 which includes a light detection device 4. A display apparatus in the form of a television set 6 with a display screen 8 is provided and, in this embodiment, a separate broadcast data receiving apparatus 10 is provided in connection with the television set and also in connection with a means for receiving data 12 and a further means for transmitting and/or receiving data 14. The broadcast receiving apparatus is provided to process received data and, from the same, generate television programmes for display on the television set incorporating video, audio and/or text and furthermore, can be used to generate further services such as e-mail, menu's of user selectable options, games, shopping and so on, all for display on the screen.

As the range of user selectable functions of the apparatus increases, so there is a need for interactive user selection apparatus which allows the user to make selections in conjunction with viewing of the display screen. In one embodiment, the user may select in many instances to continue to use the conventional remote control device via buttons 13 and the generation of infra red signals to be received by the receiver 15 in the data receiver 10 in the normal manner. However, for certain function selections they can change the operating condition of the remote control device 2, or use an alternative device, to utilise a light detection device 4.

The light detection device can be provided in one of two formats. In the first format (not shown), the device is placed onto the display screen by the user and in this form, there is provided a photo-detector which detects the CRT electron beam as it scans along the display screen. As the detector device is placed on the screen, it will only detect the electron beam as it passes the point of contact between the detection device and the screen and, at that instant, the detector is activated and transmits a signal to the remote control device.

In an alternative option, the remote control device as shown in Figure 1 the device 4 is positioned a distance away from the control device and the photo-detector is provided so that the remote control device and photo-detector can be directed by the user towards a specific location on the display in the is case shown in broken lines 17, typically to select one 21 of a range of options 19 displayed on the display screen. Preferably the field of vision of the device is relatively narrow so that, for example, the detector is sensitive to a pinhole of light in only a certain direction by optical design such as by using a narrow angle lens in a darkened tube in the detector. In this embodiment the detector detects when the light of the CRT beam of the television is within the narrow field of vision 17 on the display screen and, again, when the device is activated and detects the CRT or electron beam a signal is generated.

In the embodiment shown, regardless of which of the light detection devices is used, the signal is transmitted from the remote control device by infrared to the broadcast data receiver.

The signal generated from the light detector device is generated at the time when the electron beam is detected, or alternatively a known time thereafter. When received at the broadcast receiving apparatus, the time of reception is logged and by measuring this time relative to a reference time, typically the vertical synchronisation signal (VSync) at the start of a video frame, and the known path of the electron beam over the display screen, it is possible to obtain a time measurement from which an accurate position of the field of vision and hence location of the light sensitive detecting device with respect to the display screen can be derived. The accurate position can be derived in terms of XY coordinates on the screen and these coordinates can be compared with the position of the user selectable options 19 displayed on the screen so as to identify the option 21 which has been selected by the user. The selected option can then be performed by the processing apparatus.

It is believed that it may be necessary in some instances to calibrate this measurement for each display screen that the device is to be used with. By using this means of processing, the only information that needs to be transmitted from the light detection device to the broadcast data receiver is a signal to indicate the time of the occurrence of detection of detection of the electron beam. Thus, the signal which is sent serves to identify the information signal as being that of the light detection device and hence is a relatively short signal. It is also preferred that the data does not interact with the user's other equipment with infrared reception means.

Thus, the invention implements a light detection device to act as a means for control which allows the user the freedom to select any position on a display screen so as to select user selectable options or other features and, to do so and move the control means around the screen in any required configuration and direction and this represents a significant advantage over the remote control device where only scrolling in one or two directions was previously possible.

## Claims

1. A broadcast data receiving apparatus, said apparatus provided to receive and process data to generate television programmes and said apparatus further including a function or mode control device which allows for the user selection of functions or modes of operation of said apparatus, said apparatus further including a display screen on which a range of user selectable options can be displayed when in an appropriate mode and **characterised in that** said function or mode control device includes a light sensitive detecting device which can be directed by the user at one of the selectable options on the display screen and said light sensitive detecting device is activated by the CRT beam of the display screen passing through the field of vision of the device and, upon detection, a signal is transmitted to allow the position on the screen to be identified with respect to the activation of the light sensitive detection device.

2. A broadcast data receiving apparatus according to claim 1 **characterised in that** the location of the field of vision of the detecting device is determined with respect to the display screen and the location is compared with the position of the selectable options displayed on screen and the apparatus performs the option whose position matches the location of the field of vision of the light sensitive detection device.

3. A broadcast data receiving apparatus according to claim 1 **characterised in that** the control device transmits a signal to the data broadcast receiver upon detection of the CRT beam.

4. A broadcast data receiving apparatus according to claim 3 **characterised in that** said signal is transmitted by an infrared signal or via a cable connection from the control device to the broadcast data receiver.

5. A method of selecting an option from a range of selectable options displayed on a screen, said method utilising a broadcast data receiver to generate the display and controllable by a remote control device, said remote control device including a light detection device which the user can direct to the screen to lie on the option which the user desires to select, said light detection device detecting the time at which an electron or CRT beam of the display screen passes through the location on the screen of the field of vision of the light detection device and upon the detection, a signal is generated by the remote control device and transmitted to the broadcast data receiver which obtains data relating to the time at which the CRT beam started on the screen and calculates the time elapsed between the start point and the point of detection, in conjunction with being aware of the path of the CRT beam so the XY coordinates of the point of detection on the display screen and hence the location of the display screen at which the user has pointed the detection device is identified and the data processing means determines the user selectable option displayed on the display screen at that location and makes the required user selection.
